**Europäisches Patentamt**

(19) **European Patent Office**

**Office européen des brevets**

(11) Veröffentlichungsnummer: **0 082 983**
**B1**

(12) # EUROPÄISCHE PATENTSCHRIFT

(45) Veröffentlichungstag der Patentschrift:
**04.02.87**

(21) Anmeldenummer: **82111160.6**

(22) Anmeldetag: **02.12.82**

(51) Int. Cl.⁴: **C 08 L 63/00,** C 08 G 59/40,
C 08 L 75/08

(54) **Härtbare Kunstharzmischungen und Mittel für härtbare Kunstharzmischungen auf Basis von präpolymeren Polyätherurethanharnstoffaminen und Epoxidharzen und/oder aromatischen Carbamidsäurearylestern.**

(30) Priorität: **28.12.81 DE 3151591**

(43) Veröffentlichungstag der Anmeldung:
**06.07.83 Patentblatt 83/27**

(45) Bekanntmachung des Hinweises auf die Patenterteilung:
**04.02.87 Patentblatt 87/6**

(84) Benannte Vertragsstaaten:
**AT BE CH DE FR GB IT LI NL SE**

(56) Entgegenhaltungen:
**DE-B-2 152 606**
**DE-B-2 418 041**

(73) Patentinhaber: **SCHERING AKTIENGESELLSCHAFT
Berlin und Bergkamen, Waldstrasse 14 Postfach
15 40, D-4709 Bergkamen (DE)**

(72) Erfinder: **Brinkmann, Bernd, Dr. Dipl.- Chem., Am
Gorbach 14, D-4717 Nordkirchen (DE)**
Erfinder: **Fehr, Ewald, Kreuzstrasse 18, D-7250
Leonberg (DE)**
Erfinder: **Neffgen, Bernd, Dr. Dipl.- Chem.,
Köhlerstrasse 4, D-4714 Cappenberg (DE)**
Erfinder: **Öchsner, Waldemar, Dr. Dipl.- Chem.,
Königsallee 80, D-7140 Ludwigsburg (DE)**

## Beschreibung

Gegenstand der vorliegenden Erfindung sind härtbare Kunstharzmischungen, bestehend aus Umsetzungsprodukten aus präpolymeren Carbamidsäurearylestern und di- oder polyfunktionellen Aminverbindungen mit $\geqq$ 2 aktiven Wasserstoffatomen pro Molekül und Glycidylverbindungen mit im Durchschnitt mehr als einer Epoxidgruppe pro Molekül und/oder präpolymeren aromatischen Carbamidsäurearylestern und Mittel für die härtbaren Kunstharzmischungen zur Verwendung dieser Mischungen zur Herstellung von elastifizierten Formteilen und Flächengebilden, Dichtungsmassen, Überzügen und Klebstoffen.

Kunstharze auf Basis von Epoxidharzen und Polyisocyanaten, welche mit Polyaminen gehärtet werden, zeichnen sich in der Praxis durch eine Reihe von erwünschten Eigenschaften aus wie z.B. gute haftfestigkeit auf organischen und anorganischen Substraten, gute Lösungsmittelbeständigkeit, hohe Resistenz gegenüber Chemikalieneinwirkungen. Infolge ihrer hohen Vernetzungsdichte sind amingehärtete Epoxidharze, vor allem auf Basis von Diphenylpropan und Epichlorhydrin, sprödhart mit Glasübergangsbereichen oberhalb 20 °C.

Auf allen Anwendungsgebieten, für die Schlag- und Stoßfestigkeit sowie eine hohe Flexibilität erforderlich ist, entsprechen diese Kunstharze jedoch noch nicht den Anforderungen der Praxis. Das gilt insbesondere für den Bausektor, wo es gilt, Schwundrisse in z. B. Beton dauerhaft zu überbrücken.

In gewissem Umfang ist durch Verringerung der Vernetzungsdichte eine interne und durch Weichmacherzusatz eine externe Erhöhung des Elastifizierungsgrades erzielbar.

Externe Elastifizierungsmittel wie z. B. Teer, Phthalsäureester, hochsiedende Alkohole, Vinylpolymere und ähnliche, sind nicht reaktiv und werden nicht in das Duromer-Netzwerk eingebaut. Sie bewirken durch Raumausfüllung nur eine Aufweitung.

Eine interne Elastifizierung läßt sich durch Reduzierung der Funktionalität des Härters erreichen.

Die seit langem und in erheblichem Umfang gebräuchlichen langkettigen, niedrigfunktionellen Aminoamide auf Basis dimerisierter Fettsäuren erreichen zwar ein befriedigendes Eigenschaftsbild weicher Härter von Epoxharzen, sind aber auf bestimmten Gebieten nicht so einsetzbar, wie es wünschenswert wäre.

In der DE-AS 21 52 606 sind härtbare Kunststoffmischungen, bestehend aus a) bestimmten Glycidyläthern und b) bestimmten Carbamidsäurephenylestern aus präpolymeren Isocyanaten und Alkylphenolen und c) Polyaminen oder Polyaminoamiden beschrieben. Die Mischungen aus Carbamidsäurephenylester und Epoxidharzen weisen wegen der hohen Viskositäten der Einzelkomponenten jedoch eine für die Praxis zu große Endviskosität auf. Zur Herstellung der gebrauchsfertigen Mischung müssen daher Verdünnungsmittel zugegeben werden. Ein weiteres Problem besteht darin, daß aufgrund der sehr unterschiedlichen Äquivalentgewichte von Harz- und Härterkomponente verhältnismäßig große Harzanteile (Epoxid + Polyurethan) mit verhältnismäßig geringen Härteranteilen gemischt werden müssen, so daß die Homogenisierung - auch wegen der schlechten Mischbarkeit aufgrund des Viskositätsunterschiedes von Harz- und Härterkomponente- nicht ganz einfach ist und große Sorgfalt erfordert.

Gemäß der DE-OS 23 38 256 werden hochmolekulare amintermininierte Polyätherurethanharnstoffe durch Reaktion von freie Isocyanatgruppen enthaltenden Präpolymeren mit Aminen in stark verdünnten Lösungen hergestellt und anschließend mit Epoxidharzen ausgehärtet. Der Einsatz von Lösungsmitteln, insbesondere aromatischen Lösungsmitteln, ist in der Praxis sowohl vom technischen als auch gesundheitlichen Standpunkt aus nachteilig und unerwünscht; andererseits ist es aber für das o. a. Verfahren unerläßlich, da ansonsten Gelierung eintritt. Andererseits ist die Viskosität der lösungsmittelfreien Reaktionsprodukte, wie sie gemäß der DE-OS 23 38 256 gezielt hergestellt werden, für die Anwendung in der Praxis zu hoch.

In der DE-AS 2 418 041 wird ein Verfahren zur Herstellung von elastifizierten Formteilen und Flächengebilden beschrieben, gemäß welchem bestimmte Epoxidverbindungen umgesetzt werden mit Aminverbindungen, die durch Hydrolyse bestimmter präpolymerer Ketimine bzw. Enamine erhalten werden. Mit diesem Verfahren sind chemikalienfeste, gut haltende Duromere mit verbesserten Eigenschaften herstellbar. Bei der Hydrolyse der genannten Verbindungen werden jedoch Ketone oder Aldehyde frei, welche entfernt werden müssen.

Weiterhin ist eine noch weitere Verbesserung der Elastizität der gehärteten Produkte wünschenswert.

Aufgabe der vorliegenden Erfindung war es, diese Nachteile zu überwinden und härtbare Kunstharzmischungen zu finden, welche chemikalienfeste, gut haftende Überzüge, Klebstoffe, Flächengebilde, Dichtungsmassen und Formteile mit hoher Schlag- und Stoffestigkeit sowie verbesserter Flexibilität ergeben.

Diese Aufgabe wird erfindungsgemäß gelöst durch härtbare Kunstharzmischungen, bestehend aus

A) einem Polyätherurethanharnstoffamin mit $\geqq$ 2 reaktiven Aminwasserstoffatomen pro Molekül, hergestellt durch Umsetzung in erster Stufe von

1 a Polyalkylenpolyätherpolyolen mit einem mittleren Molekulargewicht zwischen 500 - 10000 und einem Überschuß eines

1 b di- oder polyfunktionellen aromatischen Isocyanats, wobei das Verhältnis von NCO-Gruppen zu OH-Gruppen zwischen 1,5 bis 2,5 liegt, und anschließende Verkappung mit

1 c Phenolen (POH), wobei das POH/NCO-Verhältnis zwischen 0,5 bis 1,5 liegt, und weiterer Umsetzung des so erhaltenen Carbamidsäurearylesters in zweiter Stufe mit

2 einem Überschuß mindestens einer di- und/oder polyfunktionellen Aminverbindung, welche mindestens zwei reaktive Aminwasserstoffatome pro Molekül enthält im Verhältniss Amingruppe/NCO-Gruppe von 1,5 - 2,5, vorzugsweise 1,8 - 2,2

B) Glycidylverbindungen mit im Durchschnitt mehr als einer Epoxidgruppe pro Molekül und gegebenenfalls

C) üblichen Füllstoffen, Pigmenten, Reaktionsbeschleunigern, Viskositätsregulatoren und Additiven.

Weitere Ausführungsformen sind die Gegenstände der Ansprüche 2 bis 4.

Die gemäß Anspruch 1 A) mitverwendeten Aminkomponenten werden hergestellt durch Umsetzung von 1 A 1) polyfunktionellen verkappten aromatischen Iyocyanaten mit 1 A 2) einem Überschuß mindestens einer di- und/oder polyfunktionellen Aminverbindung mit ≧ 2 aktiven Aminwasserstoffatomen pro Molekül.

Als gemäß Anspruch 1 A 1) mitzuverwendende polyfunktionelle verkappte Isocyanatgruppen enthaltende Verbindungen können die nach an sich bekannten Verfahren hergestellten linearen oder verzweigten Umsetzungsprodukte aus Polyalkylenpolyätherpolyolen mit aromatischen Di- oder Polyisocyanaten im NCO/OH-Verhältnis von 1,5 bis 2,5 und anschließender Umsetzung der endständigen NCO-Gruppe mit den auf diesem Gebiet üblichen Verkappungsmitteln verwendet werden.

Als lineare oder verzweigte Polyolkomponente mit mittleren Molekulargewichten zwischen 150 - 10 000 kommen infrage die Polyalkylenpolyätherpolyole, wie sie durch Copolymerisation, Blockcopolymerisation oder anionische Polymerisation von Alkylenoxiden wie insbesondere Äthylenoxiden, Propylenoxid, mit di- oder polyfunktionellen Alkoholen wie Äthandiol-(1,2), Propandiol-(1,3), Butandiol-(1,4) und insbesondere den höherfunktionellen Alkoholen wie 1,1,1-Trimethyloläthan, 1,1,1-Trimethylolpropan, Glycerin, 1,2,6-Hexantriol, oder mit Aminen wie Äthylendiamin und 1,6-Hexamethylendiamin als Starterkomponenten oder durch kationische Polymerisation und Copolymerisation cyclischer Äther wie Tetrahydrofuran, Äthylenoxid und Propylenoxid mit sauren Katalysatoren und durch Polykondensation von polykondensierbaren Glykolen wie Hexandiol-(1,6) in Gegenwart saurer Verätherungskatalysatoren erhalten werden.

Die genannten Hydroxylkomponenten werden in bekannter Weise mit di- oder polyfunktionellen aromatischen Isocyanaten im NCO/OH-Verhältnis von 1,5 - 2,5, vorzugsweise 1,8 - 2,2, in an sich bekannter Weise zu den entsprechenden präpolymeren Verbindungen mit endständigen NCO-Gruppen umgesetzt.

Als geeignete Polyisocyanate seien z. B. genannt: Toluylendiisocyanat-(2,4), Toluylendiisocyanat-(2,6) sowie deren technische Gemische, Diphenylmethandiisocyanat, Naphthylendiisocyanat-(1,5), dimeres Toluylendiisocyanat-(2,4) Triphenylmethantriisocyanat-(4,4'4''), das Umsetzungsprodukt aus 3 Mol Toluylendiisocyanat und 1 Mol 1,1,1-Trimethylolpropan, Tri- und Polymerisationsprodukte von Toluylendiiso-cyanat-(2,4), Gemische isomerer Diphenylmethandiisocyanate, mehr als zwei jeweils über Methylengruppen verknüpfte Benzolkerne enthaltende Di- und Polyisocyanate mit Diphenylmethanstruktur, deren Isocyanatgruppen teilweise in Carbodiimidgruppen überführt sind.

Die endständigen NCO-Gruppen der präpolymeren Verbindungen werden anschließend mit den auf diesem Gebiet üblichen Verkappungsmitteln in mindestens stöchiometrischen Mengen bei Temperaturen zwischen 50 - 120 ° C, gegebenenfalls unter Verwendung von Katalysatoren umgesetzt.

Als Verkappungsmittel werden vorzugsweise Phenole und Alkylphenole, welche durch Alkylgruppen mit 1 - 18 C-Atomen substituiert sein können wie o-, m-, p-Kresol sowie deren technische Gemische, die isomeren Xylenole, 2-sek-Butylphenol, 4-tert-Butylphenol, 4-(1,1,3,3-Tetramethyl-butyl)phenol, Amylphenole, Hexylphenole, Heptylphenole und insbesondere die 4-Nonylphenol-Gemische verwendet. Andere auf diesem Gebiet übliche Verkappungsmittel können jedoch ebenfalls verwendet werden.

Als gemäß Anspruch 1 A 2) für die weitere Umsetzung zu verwendende di- und/oder polyfunktionelle Aminverbindungen kommem diprimäre, disekundäre und primär/sekundäre, aliphatische, cycloaliphatische, heterocyclische, araliphatische Amine sowie deren Kondensationsprodukte mit Dicarbonsäuren (Polyaminoamide) in Betracht. Diese Amine, welche gegebenenfalls substituiert sein können und mindestens 2 aktive Aminwasserstoffatome pro Molekül aufweisen, werden im Verhältnis Amingruppe/verkappte NCO-Gruppe von 1,5 - 2,5, vorzugsweise 1,8 - 2,2, bei Temperaturen von 20 bis 100 ° C, vorzugsweise 50 bis 80 ° C, mit der Isocyanatkomponente allein oder im Gemisch zu den entsprechenden präpolymeren Aminverbindungen umgesetzt.

Es ist auch möglich, die Aminkomponente in größeren Mengen einzusetzen und nach erfolgter Reaktion den Überschuß durch z. B. Destillation zu entfernen.

Eine bevorzugte Ausführungsform der vorliegenden Erfindung besteht jedoch darin, daß die Amine im Reaktionsgemisch verbleiben und so als Viskositäts- und Reaktionsregulatoren wirken. Das Verhältnis zwischen Reaktionsprodukt und freiem Amin kann innerhalb relativ weiter Grenzen schwanken und somit das Härtungsmittel den jeweiligen Erfordernissen der Praxis hinsichtlich Viskosität und Reaktivität angepaßt werden.

Ein Mischungsverhältnis, wie es bei der Umsetzung von Aminen mit Isocyanat im Verhältnis der Amingruppen/Isocyanatgruppen von ca. 2: 1 bis ca. 10 bis 15: 1 und Verbleiben des überschüssigen Amins im Reaktionsgemisch entsteht, hat sich in der Praxis jedoch als ausreichend erwiesen.

Als Aminverbindungen seien beispielsweise genannt: Äthylendiamin, Diäthylentriamin, 1,2-(1,3)-Diaminopropan, 1,3(1,4)-Diaminobutan, 3-(n-Isopropyl-amino)propylamin, Hexopropylenheptamin, 1-Cyclohexylamino-3-aminopropan, 1,4-Diaminocyclohexan, 1,3-Diaminocyclohexan, 2,4-Diaminocyclohexan, 1,3-Di(amino-cyclohexyl)propan, Isophorondiamin, N,N'-Diäthyl-1,3-diaminopropan, N,N'-Diäthyl-1,4-diaminocyclohexan, N-Aminoäthylpiperazin, N-Aminpropylpiperazin, N-Aminobutylpiperazin, 1,3-Dipiperazinylpropan, 1,3-Dipiperidyl-propan und insbesondere Hexamethylendiamin, 3,3,5(3,5,5)-Trimethylhexamethylendiamin und 3,3'-Dimethyl-4,4'-diaminodicyclohexylmethan.

Die erfindungsgemäß mitverwendbaren Polyaminoamide sind Kondensationsprodukte aus Dicarbonsäuren wie z. B. Bernsteinsäure, Glutarsäure, Adipinsäure, Pimelinsäure, Suberinsäure, Azelainsäure, Sebazinsäure, Nonamethylendicarbonsäure, Dekamethylendicarbonsäure, Reppesäure und überschüssigen Aminen wie z. B. die oben angeführten Verbindungen.

Polyaminoamide und Imidazolingruppen enthaltende Polyaminoamide auf Basis von Monocarbonsäuren wie Essigsäure, Propionsäure, Buttersäure, Valerionsäure, Capronsäure, Caprylsäure, Myristinsäure, Palmitinsäure, Ölsäure, Linolsäure, Linolensäure sowie die natürlich vorkommenden tierischen und pflanzlichen Fettsäuren bzw. deren Ester und den o. a. Polyaminen, insbesondere aber den Polyalkylenpolyaminen wie Diäthylendiamin, Triäthylentetramin, Tetraäthylenpentamin können ebenfalls allein oder in Mischung eingesetzt werden.

Die erfindungsgemäß bevorzugten Amide sind Polyaminoamide und Imidazolingruppen enthaltende Polyaminoamide auf Basis dimerisierter Fettsäuren und überschüssiger Polyalkylenpolyamine, wie sie als Härtungsmittel auf dem Epoxidharzgebiet zum bekannten Stand der Technik gehören.

Neben den obengenannten erfindungsgemäßen Härtungsmitteln gemäß Anspruch 1 A) können zur Modifizierung auch die auf diesem Gebiet üblichen aminischen Härtungsmittel für Epoxidharze mitverwendet werden.

Die erfindungsgemäß mitverwendeten Epoxidharze gemäß A 1 B) sind heiß und kalt mit diesen Härtern oder Härtermischungen härtbar. Sie enthalten im Durchschnitt mehr als eine Epoxidgruppe im Molekül und können Glycidyläther von mehrwertigen Alkoholen, wie z. B. Glycerin, hydriertes Diphenylolpropan oder von mehrwertigen Phenolen, wie z. B. Resorcin, Diphenylolpropan oder Phenol-aldehyd-Kondensaten sein. Es können auch die Glycidylester mehrwertiger Carbonsäuren, wie Hexahydrophthalsäure oder dimerisierte Fettsäuren verwendet werden. Die Epoxidwerte der genannten Verbindungen liegen etwa zwischen 0,02 bis 0,7.

Besonders bevorzugt ist der Einsatz von flüssigen Epoxidharzen auf Basis von Epichlorhydrin und Diphenylolpropan mit einem Nolekulargewicht von 340 bis 450.

Gegebenenfalls können reaktive Verdünner wie z. B. Butylglycidyläther, Kresylglycidyläther, Neopentylglykoldiglycidyläther, Phenylglycidyläther, Glycidylacrylate, Styroloxide mitverwendet werden.

Zur Herstellung der gebrauchsfertigen Mischung können weiterhin übliche Füllstoffe, Pigmente, Reaktionsbeschleuniger, Viskositätsregulatoren und Additive mitverwendet werden, wie z. B. Sande, Gesteinsmehle, Kieselsäure, Asbestmehl, Kaolin, Talkum, Metallpulver der Eisen- und Nichteisenmetalle, Teer, Teerpech, Asphalte, Korkschrote und Korkmehle, Vinylkunststoffe, Polyolefine, Polyamide, übliche Phthalsäureester, aromatische Alkohole wie Benzylalkohol.

Die erfindungsgemäßen härtbaren Mischungen eignen sich für Überzüge, Klebstoffe, Flächengebilde, Dichtungsmassen und Formteile auf allen Anwendungsgebieten, wo gute Haftung, Chemikalienbeständigkeit sowie hohe Schlag- und Stoßfestigkeit und verbesserte Flexibilität und Elastizität gefordert werden, wie z. B. auf dem Bausektor bei der rißüberbrückenden Fugenausfüllung.

A) Herstellung der Polyätherurethancarbonsäurearylester

100 g eines trifunktionellen Polypropylenglykols der OH-Zahl 56, welches nach bekannten Verfahren durch anionische Polymerisation von Propylenoxid mit 1,1,1-Trimethylolpropan bzw. dessen Natriumalkoholat als Startkomponente erhalten worden ist, und 150 g Toluylendiisocyanat-(2,4) werden bei 20 - 25 °C gemischt. Die Mischung wird 5 Stunden unter Rühren auf 70 °C erhitzt, wonach sie einen NCO-Gehalt von 3 Gewichtsprozent aufweist. Zum auf 20 - 25 °C abgekühlten Isocyanatprepolymeren werden 5 g Dibutylzinndilaurat und 190 g eines technischen 4-Nonyl-phenol-Gemisches mit verzweigten Nonylresten gegeben. Anschließend wird weitere 4 Stunden unter Rühren auf 70 °C erhitzt. Das Produkt erhält danach praktisch kein Isocyanat und hat ein Äquivalentgewicht von ungefähr 1630.

B) Herstellung der Polyätherurethanharnstoffamine

**Beispiel 1**

Zu 8,5 Gew.-Teilen auf 60 °C vorgewärmten 3,3,5(3,5,5)-Trimethylhexamethylendiamins wurden unter gutem Rühren innerhalb von 3 Stunden 91,5 Gew.-Teile des gemäß A) hergestellten und ebenfalls auf 60 °C erwärmten Produktes zugegeben. Nach einer Nachreaktionszeit von 1 Stunde bei 60 °C wurden 22,0 Gew.-Teile Benzylalkohol zugegeben. Die Viskosität betrug bei 25 °C ca. 46000 mPas. Der Amingruppengehalt entsprach 26,3 mg KOH.

**Beispiel 2**

19 g des unter A) hergestellten Produktes werden mit 19 g Trimethylhexamethylendiamin wie in Beispiel 1 umgesetzt.

Das Umsetzungsprodukt hat einen Gehalt an Amingruppen ent sprechend 330 mg KOH und eine Viskosität von 771 m Pa.s.

**Beispiel 3**

29 g des unter A) hergestellten Produktes werden mit 29 g 3,3'-Dimethyl-4,4'-diaminodicyclohexylmethan wie in Beispiel 1 umgesetzt. Das Umsetzungsprodukt hat einen Amingruppengehalt entsprechend 214 mg KOH und eine Viskosität von ca. 30000 m Pa. s.

**Beispiel 4**

10,2 g Isophorondiamin wurden entsprechend der Druchführung von Beispiel 1 mit 100 g des gemäß A) hergestellten Produktes umgesetzt und anschließend mit 19,4 g Trioctylphosphat homogenisiert. Der Amingruppengehalt entsprach 30,2 mg KOH; die Viskosität bei 70 °C betrug 8900 m Pa. s.

**Beispiel 5**

8,2 g Xylylendiamin wurden entsprechend der Durchführung von Beispiel 1 mit 100 g des gemäß A) hergestellten Produktes umgesetzt und anschließend mit 19,1 g Trioctylphosphat homogenisiert. Der Amingruppengehalt entsprach 30,7 mg KOH, die Viskosität bei 70 °C betrug 15700 m Pa. s.

**Beispiel 6**

7,8 g N-Aminoäthylpiperazin wurden entsprechend der Durchführung von Beispiel 1 mit 100 g des gemäß A) hergestellten Produktes umgesetzt und anschließend mit 19,3 g Trioctylphosphat homogenisiert. Der Amingruppengehalt für die prim./ sek. Amingruppen entsprach 30,4 mg KOH; die Viskosität bei 70 °C betrug 7800 m Pa. s.

C) Herstellung der elastifizierten Kunstharzmassen

**Beispiel 1**

85 Gew.-Teile eines Epoxidharzes auf Basis von Bisphenol A und Epichlorhydrin mit einem Ep-Wert von 0,53 und einer Viskosität von ca. 8000 m Pa. s bei 25 °C wurden mit 15 Gew.-Teilen Dibutylphthalat verdünnt. Die Viskosität der Mischung betrug bei 20 °C 2670 m Pa. s. Zu 100 Gew.-Teilen dieser verdünnten Mischung wurden 38 Gew.-Teile der Härtermischung gemäß Beispiel B 2) zugefügt und homogenisiert. Die härtbare Mischung wurde in Platten von 4 mm Dicke gegossen und bei 23 °C härten gelassen. Der Härteeinstieg wurde bestimmt (Shore-Härte nach DIN 53505) sowie nach 7 Tagen Härtung bei 23 °C die Zugfestigkeit und Bruchdehnung (nach DIN 53455), Biegefestigkeit (DIN 53452), Druckfestigkeit (in Anlehnung an DIN 53454) und die Wärmeformbeständigkeit nach Martens (DIN 53458).

Es wurden folgende Ergebnisse gemessen: Biegefestigkeit 49,3 N/mm², Zugfestigkeit 30,8 N/mm², Druckfestigkeit 53 N/mm², Shore D-Härte 73, Martenswert 34,5 °C, Bruchdehnung 18,8 %.

**Beispiel 2**

Beispiel 2 wurde analog Beispiel 1 durchgeführt, mit der Abänderung, daß zu 100 Gew.-Teilen der Epoxidharzmischung 58 Gew.-Teile der Härtermischung gemäß Beispiel B 3) zugefügt wurden.

Es wurden folgende Ergebnisse gemessen: Biegefestigkeit 44,4 N/mm², Zugfestigkeit 28,3 N/mm², Druckfestigkeit 48,7 N/mm², Shore D-Härte 71, Martenswert 34 °C, Bruchdehnung 18,0%.

**Vergleichsbeispiele**

**Beispiel 3**

Zu 100 Gew.-Teilen einer Epoxidharzmischung, bestehend aus 85 Gew.-Teilen eines Epoxidharzes auf Basis von Bisphenol A und Epichlorhydrin mit einem Ep-Wert von 0,53 und 15 Gew.-Teilen Dibutylphthalat (Viskosität der Mischung ca. 2670 m Pa. s bei 20 °C) wurden 19 Gew.-Teile des Carbamidsäurearylesters gemäß A gegeben. Die Viskosität der Mischung betrug 7410 m Pa. s.

Dieser Mischung wurden 19 Gew.-Teile Trimethylhexamethylendiamin (Viskosität 5,6 m Pa. s) zugesetzt.

Aufgrund des großen Viskositätsunterschiedes von Harz und Härter gestaltete sich die Homogenisierung selbst unter Laborbedingungen erheblich schwieriger als mit den erfindungsgemäßen Härtern.

Die härtbare Mischung wurde gemäß Beispiel C 1 weiterverarbeitet und abgeprüft.

Es wurden folgende Ergebnisse gemessen: Biegefestigkeit 54,2 N/mm$^2$, Zugfestigkeit 35,2 N/mm$^2$, Druckfestigkeit 55,0 N/mm$^2$, Shore D-Härte 74, Martenswert 37 °C, Bruchdehnung 13,7%.

## Beispiel 4

Beispiel 4 wurde analog Beispiel 1 durchgeführt, mit der Abänderung, daß als Härtungsmittel 29 Gew.-Teile 3,3'-Di-methyl-4,4'-diaminodicyclohexylmethan eingesetzt wurden.

Es wurden folgende Ergebnisse gemessen: Biegefestigkeit 53,0 N/mm$^2$, Zugfestigkeit 31,6 N/mm$^2$, Druckfestigkeit 51,3 N/mm$^2$, Shore D-Härte 73, Martenswert 36 °C, Bruchdehnung 8,6%.

**Patentasprüche** für die Vertrasstaaten: BE CH DE FR GB IT LI NL SE

1. Härtbare Kunstharzmischungen, bestehend aus

A einem Polyätherurethanharnstoffamin mit ≥ 2 reaktiven Aminwasserstoffatomen pro Molekül, hergestellt durch Umsetzung in erster Stufe von

1 a Polyalkylenpolyätherpolyolen mit einem mittleren Molekulargewicht zwischen 500 - 10000 und einem Überschuß eines

1 b di- oder polyfunktionellen aromatischen Isocyanats, wobei das Verhältnis von NCO-Gruppen zu OH-Gruppen zwischen 1,5 bis 2,5 liegt; und anschließende Verkappung mit

1 c Phenolen (POH), wobei das POH/NCO-Verhältnis zwischen 0,5 bis 1,5 liegt, und weiterer Umsetzung des so erhaltenen Carbamidsäurearylesters im zweiter Stufe mit

2 einem Überschuß mindestens einer di- und/oder polyfunktionellen Aminverbindung, welche mindestens zwei reaktive Aminwasserstoffatome pro Molekül enthält im Verhältnis Amingruppe/verkappte NCO-Gruppe von 1,5 - 2,5

B) Glycidylverbindungen mit im Durchschnitt mehr als einer Epoxidgruppe pro Molekül und gegebenenfalls

C) üblichen Füllstoffen, Pigmenten, Reaktionsbeschleunigern, Viskositätsregulatoren und Additiven.

2. Härtbare Mischungen gemäß Anspruch 1, dadurch gekennzeichnet, daß die Umsetzungsprodukte gemäß A) hergestellt werden aus

I einem aliphatischen Polyalkylenpolyäthertriol mit einem Molgewicht von ca. 2000 und

II Toluylendiisocyanat

wobei das Verhältnis der Gruppen NCO/OH = 2 ist und weitere Umsetzung des gebildeten-NCO-Gruppen enthaltenen Präpolymeren mit

III einem Isomerengemisch des p-Nonylphenol mit verzweigten Alkylresten (PhOH)

mit einem PhOH/NCO-Verhältnis von 1 und weitere Umsetzung des Carbamidsäurearylesters mit

IV 3,3,5(3,5,5)-Trimethylhexamethylendiamin und/oder 3,3'Dimethyl-4,4'diaminodicyclohexylmethan

wobei das Verhältnis der Amingruppen zu den Arylestergruppen 2: 1 beträgt.

3. Härtbare Mischungen gemäß den Ansprüchen 1 und 2, dadurch gekennzeichnet, daß zusätzlich zu den Polyätherurethanaminen gemäß 1 A) übliche aminische Härtungsmittel für Epoxidharze mit ≥ 2 aktiven Aminwasserstoffatomen Mitverwendet werden.

4. Mittel für die härtbaren Mischungen, dadurch gekennzeichnet, daß es besteht aus einem Umsetzungsprodukt gemäß Anspruch 1.

**Patentansprüche** für den Vertragsstaat AT

1. Verfahren zur Herstellung von härtbaren Kunstharzmischungen unter an sich bekannten Bedingungen aus

A) einem Polyätherurethanharnstoffamin mit ≥ 2 reaktiven Aminwasserstoffatomen pro Molekül, hergestellt durch Umsetzung in erster Stufe von

1 a Polyalkylenpolyäthernolyolen mit einem mittleren Molekulargewicht zwischen 500 - 10000 und einem Überschuß eines

1 b di- oder polyfunktionellen aromatischen Isocyanats, wobei das Verhältnis von NCO-Gruppen zu OH-Gruppen zwischen 1,5 bis 2,5 liegt, und anschließende Verkappung mit

1 c Phenolen (POH), wobei das POH/NCO-Verhältnis zwischen 0,5 bis 1,5 liegt, und weiterer Umsetzung des so erhaltenen Carbamidsäurearyl; esters in zweiter Stufe mit

2 einem Überschuß mindestens einer di- und/oder polyfunktionellen Aminverbindung, welche mindestens zwei reaktive Aminwässerstoffatome pro Molekül enthält im Verhältnis Amingruppe/verkappte NCO-gruppe von 1,5 - 2,5

B) Glycidylverbindungen mit im Durchschnitt mehr als einer Epoxidgruppe pro Molekül und gegebenenfalls

C) üblichen Füllstoffen, Pigmenten, Reaktionsbeschleunigern, Viskositätsregulatoren und Additiven.

2. Verfahren zur Herstellung von härtbaren Mischungen gemäß Anspruch 1, dadurch gekennzeichnet, daß die Umsetzungsprodukte gemäß A) hergestellt werden aus

I einem aliphatischen Polyalkylenpolyäthertriol mit einem Molgewicht von ca. 2000 und

II Toluylendiisocyanat

wobei das Verhältnis der Gruppen NCO/OH = 2 ist und weitere Umsetzung des gebildeten NCO-Gruppen enthaltenden Präpolymeren mit

III einem Isomerengemisch des p-Nonylphenol mit verzweigten Alkylresten (PhOH)

mit einem PhOH/NCO-Verhältnis von 1 und weitere Umsetzung des Carbamidsäurearylesters mit

IV 3,3,5(3,5,5)-Trimethylhexamethylendiamin und/oder 3,3'Dimethyl-4,4'diamino-dicylohexylmethan

wobei das Verhältnis der Amingruppen zu den Arylestergruppen 2 : 1 beträgt.

3. Verfahren zur Herstellung von härtbaren Mischungen gemäß den Ansprüchen 1 und 2, dadurch gekennzeichnet, daß zusätzlich zu den Polyätherurethanaminen gemäß 1 A) übliche aminische Härtungsmittel für Epoxidharze mit ≧ 2 aktivem Aminwasserstoffatomen mitverwendet werden.

4. Verfahren zur Herstellung von härtbaren Mischungen, dadurch gekennzeichnet, daß es besteht aus einem Umsetzungsprodukt gemäß Anspruch 1.

**Claims** for the contracting states: BE CH DE FR GB IT LI NL SE

1. Curable synthetic resin compositions comprising

A) a polyetherurethane urea amine with ≧ 2 reactive amino-hydrogen atoms per molecule, prepared by the reaction in a first stage of

1a Polyalkylene-polyether-polyols with a mean molecular weight between 500-10000 and an excess of a

1b di-or poly-functional aromatic iso-cyanate. in which the ratio of NCO-groups to OH-groups is between 1.5 and 2.5. and the resulting masked compound with

1c Phenols (POH) in which the POH/NCO ratio is between 0.5 and 1.5, and further conversion of the resulting carbamic acid aryl esters in a second stage with

2 an excess of at least one di-and/or poly-functional amine compound which contains at least two reactive amino-hydrogen atoms per molecule in the ratio of amino groups: masked NCO-groups of 1.5 - 2.5

B) Glycidyl compounds with an average of more than one epoxide group per molecule. and optionally

C) usual fillers, pigments, accelerators, viscosity regulators and additives.

2. Curable compositions according to claim 1 characterised in that the reaction product according to A) is prepared from

I an aliphatic polyalkylene polyethertriol with a molecular weight of about 2000 and

II toluyldiisocyanate

in which the ratio of the NCO:OH groups is 2. and further conversion of the resulting NCO-containing prepolymer with

III an isomeric mixture of p-nonylphenol with branched alkyl groups (PhOH)

with a PhOH:NCO ratio of 1 and further conversion of the carbamic acid aryl esters with

IV 3.3.5(3,5,5)-trimethylhexamethylenediamine and/or 3,3'dimethyl-4,4'diaminodicyclohexylmethane

in which the ratio of amino groups to the aryl ester groups is 2:1.

3. Curable compositions according to claims 1 to 2 characterised in that the polyetherurethane amines according to 1A) are used together with the usual amine curing agents for epoxide resins with ≧ 2 amine hydrogen atoms.

4. Agent for curable compositions characterised in that it consists of a reaction product according to claim 1.

**Claims** for the Contracting State: AT

1. Process for the preparation of curable synthetic resin compositions under known conditions from

A) a polyetherurethane urea amine with ≧2 reactive amino-hydrogen atoms per molecule, prepared by the reaction in a first stage of

1a Polyalkylene-polyether-polyols with a mean molecular weight between 500-10000 and an excess of a

1b di-or poly-functional aromatic iso-cyanate, in which the ratio of NCO-groups to OH-groups is between 1.5 and 2.5, and the resulting masked compound with

1c Phenols (POH) in which the POH/NCO ratio is between 0.5 and 1.5, and further conversion of the resulting carbamic acid aryl esters in a second stage with

2 an excess of at least one di-and/or Poly-functional amine compound which contains at least two reactive amino-hydrogen atoms per molecule in the ratio of amino groups:masked NCO-groups of 1.5 - 2.5

B) Glycidyl compounds with an average of more than one epoxide group per molecule, and optionally

C) usual fillers, pigments, accelerators, viscosity regulators and additives.

2. Process for the preparation of curable compositions according to claim 1 characterised in that the reaction product according to A) is prepared from

I an aliphatic polyalkylene polyethertriol with a molecular weight of about 2000 and

II toluyldiisocyanate

in which the ratio of the NCO:OH groups is 2, and further conversion of the resulting NCO-containing prepolymer with

III an isomeric mixture of p-nonylphenol with branched alkyl groups (PhOH)

with a PhOH:NCO ratio of 1 and further conversion of the carbamic acid aryl esters with

IV 3,3,5(3,5,5)-trimethylhexamethylenediamine and/or 3,3'dimethyl-4,4'diaminodicyclohexylmethane

in which the ratio of amino groups to the aryl ester groups is 2:1.

3. Process for the preparation of curable compositions according to claims 1 to 2 characterised in that the polyetherurethane amines according to 1A) are used together with the usual amine curing agents for epoxide resins with ≧2 amine hydrogen atoms.

4. Process for the preparation of a curable composition characterised in that it consists of a reaction product according to claim 1.

**Revendications** pour les Etats contractants: BE, CH, DE, FR, GB, IT, LI, NL, SE

1. Mélange de résine synthétique durcissable comprenant:

A) Une aminopolyétheruréthanne-urée ayant au moins deux atomes d'hydrogène d'amine réactifs par molécule, préparée par réaction, dans une première étape, de la des polyalkylènes-polyétherpolyols ayant une masse moléculaire moyenne de 500 à 10000 avec un excès d'un

1b diisocyanate ou polyisocyanate aromatique, dans un rapport des groupes NCO aux groupes HO compris entre 1,5 et 2,5, puis masquage avec

1c des phénols (POH), dans un rapport PHO/HCO compris entre 0,5 et 1,5, suivie d'une réaction, dans une seconde étape, de l'ester arylique de l'acide carbamique ainsi formé avec

2 un excés d'un ou de plusieurs composés diaminés et/ou polyaminés avec au moins deux atomes d'hydrogène d'amine réactifs par molécule, dans un rapport groupes amine/groupes NCO compris entre 1,5 et 2,5,

B) Des composés glycidyliques avec en moyenne plus d'un groupe époxyde par molécule, et le cas échéant,

C) Des charges, pigments, accélérateurs de réaction, régulateurs de viscosité et autres additifs usuels.

2. Mélange durcissable selon la revendication 1 caractérisé en ce que les produits de réaction A) sont preparés avec:

I. un polyalkylènepolyéthertriol aliphatique ayant une masse moléculaire d'environ 2000 et

II. du diisocyanate de toluylène dans le rapport 2 entre les groupes NCO et OH, puis réaction du prépolymère formé à groupes NCO avec

III. un mélange d'isomères du p-nonylphénol à radicaux alkyles ramifiés (PhOH) dans le rapport 1 PhOH/NCO, puis réaction de carbamate d'aryle avec

IV. la 3,3,5-(3,5,5)-triméthylhexaméthylène-

diamine et/ou le 3,3'-diméthyl-4,4'-diamino-dicyclohexylméthane le rapport des groupes amino aux groupes d'ester arylique étant le rapport 2.

3. Mélange durcissable selon la revendication 1 ou 2, caractérisé en ce que en plus des polyétheruréthanne-amines 1A), on utilise conjointement des durcisseurs aminés courants pour résines époxydes ayant au moins deux atomes d'hydrogène actifs de groupes amino.

4. -Agent pour mélanges durcissables caractérisé en ce qu'il est formé d'un produit de réaction selon la revendication 1.

**Revendications** pour l'Etat contractant: AT

1. Procédé de préparation de mélanges de résine synthétique durcissables dans des conditions connues à partir de:

a) Une aminopolyétheruréthanne-urée ayant au moins deux atomes d'hydrogène d'amines réactifs par molécule préparée par réaction, dans une première étape de la des polyalkylènes-polyétherpolyols ayant une masse moléculaire moyenne de 500 à 10000 avec un excés d'un

1b diisocyanate ou polyisocyanate aromatique, dans un rapport des groupes NCO aux groupes HO compris entre 1,5 et 2,5, puis masquage avec

1c des phénols (POH), dans un rapport PHO/NCO compris entre 0,5 et 1,5 suivie d'une réaction, dans une seconde étape de l'ester arylique de l'ester carbamique ainsi formé avec

2 un excés d'un ou de plusieurs composés diaminés et/ou polyaminés avec au moins deux atomes d'hydrogène d'amine réactifs par molécule, dans un rapport groupes amine/groupes NCO compris entre 1,5 et 2,5.

B) Des composés glycidyliques avec en moyenne plus d'un groupe époxyde par molécule, et le cas échéant,

C) Des charges, pigments, accélérateurs de réactions, régulateurs de viscosité et autres additifs usuels.

2. Procédé selon la revendication 1 caractérisé en ce que les produits de réaction A) sont préparés avec:

I. un polyalkylénepolyéthertriol aliphatique ayant une masse moléculaire d'environ 2000 et

II. du diisocyanate de toluylène dans le rapport 2 entre des groupes NCO et OH, puis réaction du prépolymère formé à groupes NCO avec

III. un mélange d'isomères du p-nonylphénol à radicaux alkyles ramifiés (PhOH) dans le rapport 1 PhoH/NCo, puis réaction du carbamate d'aryle avec

IV. la 3,3,5-(3,5,5)-triméthylhexaméthylène-diamine et/ou le 3,3,-diméthyl-4,4'-diamino-dicyclohexylméthane le rapport des groupes amino aux groupes d'ester arylique étant le rapport 2.

3. Procédé selon la revendication 1 ou 2, caractérisé en ce que en plus des polyétheruréthanne-amines 1A), on utilise conjointement des durcisseurs aminés courants pour résines époxydes ayant au moins deux atomes d'hydrogène actifs de groupes amino.

4. Procédé de préparation de mélanges durcissables, caractérisé en ce que l'agent employé est un produit de réaction selon la revendication 1.